# EUROPÄISCHE PATENTSCHRIFT

(11) **EP 3 123 044 B1**
(45) Veröffentlichungstag und Bekanntmachung des Hinweises auf die Patenterteilung: **21.03.2018**
(21) Anmeldenummer: 14761785.6
(22) Anmeldetag: 01.08.2014
(51) Int. Cl.: F16D 13/70

(54) **BLECHANPRESSPLATTE UND DRUCKTOPF ALS GEMEINSAMES BAUTEIL**
SHEET METAL PRESSURE PLATE AND PRESSURE POT AS JOINT COMPONENT
PLAQUE DE PRESSION ET BOÎTE DE SÉCURITÉ SOUS FORME DE COMPOSANT COMMUN

(30) Priorität: 27.03.2014 DE 102014205773
(43) Veröffentlichungstag der Anmeldung: 01.02.2017
(73) Patentinhaber: Schaeffler Technologies AG & Co. KG, 91074 Herzogenaurach (DE)
(72) Erfinder: BAUMANN, Michael, 77886 Lauf (DE); KELLER, Aurelie, F-67240 Oberhoffen sur Moder (FR); THOMAS HURLE, Thomas, 77830 Bühlertal (DE)
(86) Internationale Anmeldenummer: PCT/DE2014/200373
(87) Internationale Veröffentlichungsnummer: WO 2015/144107

(56) Entgegenhaltungen:
- WO-A1-2011/040869
- DE-A1- 10 018 677
- US-A- 6 006 883
- US-A1- 2010 279 810

## Beschreibung

Die Erfindung betrifft eine Kupplung, wie eine trockene oder nasse Einfach- oder Mehrscheibenkupplung, insbesondere Doppelkupplung, für ein Kraftfahrzeug, mit einer Anpressplatte, die zum Einklemmen eines Drehmomentweitergabeorgans, wie einer Lamelle oder einer Reibscheibe, zusammen mit einer Gegendruckplatte vorbereitet ist, wobei über ein Druckweitergabeorgan ein Kraftübertragungsweg zwischen einer Betätigungseinheit, wie einem Aktor nach Art eines etwa hydraulisch, mechanisch oder elektrisch ausfahrbaren Kolbens oder eines konzentrischen Nehmerzylinders (CSC) vorgehalten ist.

Solche Kupplungen, also Einfachkupplungen, Mehrscheibenkupplungen, insbesondere Doppelkupplungen, sind bereits aus dem Stand der Technik bekannt.

Beispielsweise offenbart die EP 1 524 446 B1 ein Kupplungsaggregat mit mindestens zwei Reibungskupplungen, die jeweils mindestens eine Kupplungsscheibe aufweisen, wobei die beiden Kupplungsscheiben mit einer eigenen anzutreibenden Welle verbindbar sind und die beiden Kupplungen unabhängig voneinander über jeweils einen Betätigungsmechanismus ein- und ausrückbar sind, wobei die Schließkraft der Kupplungen unmittelbar von den Betätigungsmechanismen aufgebracht wird. Als besonders ist in dieser besagten Patentschrift herausgestellt, dass die Kombination bestimmter Merkmale vorliegt, nämlich dass beide Kupplungen jeweils von einer ringförmig ausgebildeten Kolben-Zylindereinheit der Betätigungsmechanismen betätigbar sind, dass die Kolben-Zylindereinheiten koaxial und zumindest teilweise axial ineinander geschachtelt sind, und dass zur Übertragung der Anpresskraft zwischen der jeweiligen Anpressplatte und einer Kupplung und dem zugeordneten Betätigungsmechanismus ein topf- oder tellerförmiges, praktisch starres Zwischenelement vorgesehen ist.

Bei direkt betätigten Kupplungen wird die Kraft zur Übertragung eines Drehmoments vom Einrücksystem über einen Drucktopf üblicherweise als Betätigungselement auf eine Anpressplatte / Lamelle und dann weiter an die Reibscheiben / Reiblamellen übertragen. Leider wird bei der momentanen in der Technik anstehenden Optimierung von Kupplungen der Bauraum in Axialrichtung immer kleiner. Dies wirkt sich für herkömmliche Anpressplatten und Drucktopfausgestaltungen, bspw. Drucktopfpakete immer negativer aus. Ferner ist bspw. bei Lamellenkupplungen zu beklagen, dass die Anpressplatte bzw. die Lamelle beim Öffnen der Kupplung nicht aktiv belüftet wird.

Zwar ist es bisher möglich, den Drucktopf über eine Blattfederbeaufschlagung oder eine Tellerfederbeaufschlagung abzuheben, nicht aber die Anpressplatte oder eine anpressplattenähnliche Lamelle. Auch tritt starker Verschleiß zwischen den üblichen Drucktopfauflagen und der Anpressplatte / Lamelle auf. Dies verlängert den Einrückweg der Kupplung erheblich. Somit ist ein Mehr an Betätigungsenergie zur Übertragung des Drehmoments erforderlich. Auch ist der Montageaufwand derzeit noch zu hoch, da mindestens zweiteilige Lösungen, ggf. unter Einsatz zusätzlicher Verbindungselemente zwischen dem Drucktopf und der Anpressplatte, eingesetzt werden. Die Herstellkosten sind ebenfalls zu hoch, da ein großer Materialeinsatz vonnöten ist, um die bisherigen Lösungen zu realisieren. Der Drucktopf muss auch separat zentriert und ausgerichtet werden, was aufwändig und kostenintensiv ist. Wird dies nicht durchgeführt, ist die Effizienz der Kupplung unangemessen niedrig. Selbst bei dem Transport zum Montageplatz ist ein Nachteil zu erkennen, so wird bisher eine separate Transportsicherung nötig und/oder eine separate Verliersicherung.

Aus der DE 100 18 677 A1 ist bereits eine normal offene, einfache Reibkupplung bekannt, bei der über einen Zylinder direkt auf einen vorkragenden Abschnitt einer herkömmlichen Anpressplatte gedrückt wird um die Kupplung im geschlossenen Zustand zu halten. Eine ähnliche Anpressplatte ist auch in der US 6,006,883 A gezeigt. Weiterhin zeigen die Veröffentlichungen WO 2011/040869 A1 und US 2010/0279810 A1 ähnliche Anpressplatten, hier aber bauartbedingt eher in einer hülsenförmigen Ausführung.

Es ist die Aufgabe der vorliegenden Erfindung, die Nachteile aus dem Stand der Technik zu vermeiden und eine vereinfachte Kupplung zur Verfügung zu stellen. Diese Aufgabe wird bei einer gattungsgemäßen Kupplung erfindungsgemäß dadurch gelöst, dass das Druckweitergabeorgan als ein integraler Bestandteil der Anpressplatte vorzugsweise zum direkten Kontaktiert werden von der Betätigungseinheit ausgebildet / ausgelegt ist.

Auf diese Weise wird eine Reduzierung von Bauteilen bzw. die Integration von Bauteilfunktionen in vorhandene Bauteile erreicht. Auch wird der axiale Bauraum besser ausgenutzt. Die Integration von Bauteilfunktionen in andere Bauteile reduziert die Kosten.

Man könnte auch sagen, dass die erfinderische Lösung der Aufgabe darin besteht, den Drucktopf und die Anpressplatte zu einem Bauteil zu vereinen, um damit den oben genannten Nachteilen entgegen zu wirken. Desweiteren hat man eine bessere Materialausnutzung sowie eine Reduzierung des Gewichtes und damit auch der Massenträgheit. Eine separate Verliersicherung ist nicht mehr nötig. Anzumerken ist, dass unter einem integralen Bestandteil eine einteilige möglichst einmaterialige Ausgestaltung umfasst ist.

Erfindungsgemäß ist vorgesehen, dass die Anpressplatte mit einem das Druckweitergabeorgan stellendem Abschnitt / Fortsatz als Blechplatte ausgebildet ist. Ein einfaches, aber hoch funktionables Bauteil kann dann mit einfachen Mitteln hergestellt werden.

Vorteilhafte Ausführungsformen sind in den Unteransprüchen beansprucht und werden nachfolgend näher erläutert.

Ferner ist es von Vorteil, wenn die Blechplatte spanlos, etwa durch einen oder mehrere Umformvorgänge, bspw. Kaltumformvorgänge, wie Tiefziehvorgänge oder Stanzvorgänge, in die Endform gebracht ist. Aufwändige spanende Bearbeitungsschritte können dann vermieden werden. Der Durchsatz in der Produktion wird erhöht und die Kosten dadurch reduziert.

Es ist auch zweckmäßig, wenn die Blechplatte möglichst überall eine gleichbleibende / gleichmäßige Dicke aufweist oder zum Kontaktbereich des Druckweitergabeorgans mit der Betätigungseinheit, etwa an einem radial inneren Bereich, hin eine abnehmende Dicke aufweist. Einerseits kann dann auf einfache Ausgangsmaterialien zugegriffen werden und andererseits eine Federelastizität vorgehalten werden.

So ist es von Vorteil, wenn die Blechplatte einen federelastischen Abschnitt aufweist, und zwar im Bereich eines Teils des Druckweitergabeorgans, im Übergangsbereich zwischen dem Druckweitergabeorgan und der Anpressplatte oder im gesamten Bereich des Druckweitergabeorgans. In diesem Fall ist der Kontaktbereich nicht als geschlossener Ring ausgestattet, sondern geschlitzt. Es ist auch von Vorteil, wenn das Druckweitergabeorgan alternativ oder zusätzlich zungenartig ausgebildet ist. Die Anpressplatte und der Drucktopf sind gemeinsam aus einem Blech gestanzt und umgeformt. Sie bilden ein integriertes Bauteil. Das Betätigungselement kann nämlich Federeigenschaften aufweisen und kann auch als Hebel ausgeführt sein, insbesondere wenn bspw. eine Reibfläche der Anpressplatte nicht radial außen angeordnet ist, sondern bspw. radial innen (und in Axialrichtung kontaktierbar) und sich das Betätigungselement an einem Deckel abstützen kann. Eine direkt aktuierbare Doppelkupplung lässt sich dann einfach herstellen. Wenigstens in einer Teilkupplung ist das aktuierende Element und die Anpressplatte / eine Druckplatte aus einem einzigen Blech als zusammenhängendes, integral konnektiertes Element ausgestaltet.

Eine Anpressplatte mit integriertem Betätigungselement lässt sich auch dann einfach umsetzen, wenn die Anpressplatte als ein zum Zusammenwirken mit dem Drehmomentweitergabeorgan (extra) vorbereitete Reibfläche aufweisendes Bauteil ausgestaltet ist und/oder eine Betätigungsgruppe aufweist.

Ein vorteilhaftes Ausführungsbeispiel ist auch dadurch gekennzeichnet, dass das Druckweitergabeorgan durch Aussparungen perforiert ist, um einen Kühlfluidzugang in Richtung des Drehmomentweitergabeorgans zu ermöglichen. Ein solches Kühlfluid kann bspw. Luft oder eine Flüssigkeit, wie Öl sein.

Um ein aktives Lüften der Kupplung zu ermöglichen, ist es von Vorteil, wenn ein Federelement, wie eine Blattfeder, ein Blattfederpaket oder eine Tellerfeder, an der Anpressplatte, vorzugsweise radial außen, hauptsächlich in Axialrichtung wirkend und/oder die Kupplung öffnend oder schließend, angreift.

Wenn die Einzelbauteile so aufeinander abgestimmt und angeordnet sind, dass in einer Schlupfphase Energie aufgenommen wird, so wird ein effizientes Nutzen der Kupplung über die Lebensdauer vereinfacht.

Veröffentlicht ist auch ein Verfahren zum Herstellen einer Anpressplatte für eine Kupplung, wobei über ein spanloses Formgebungsverfahren aus (nur) einer (einzigen) Blechplatte eine Anpressplatte mit daran integriertem Druckweitergabeorgan, etwa nach Art eines Drucktopfes, ausgeformt wird.

Bei der vorliegenden Erfindung handelt es sich um eine Verbesserung direkt betätigter Kupplungssysteme, welche mit einem Drucktopf betätigt werden. Durch die Integration des Drucktopfes in die Anpressplatte kann der axiale Bauraumbedarf, die Masse und die Massenträgheit der Kupplung reduziert werden. Die Montage wird durch Reduzierung der Einzelbauteile und Entfall von Positionier- und Zentrierarbeitsschritten, vereinfacht. Dies reduziert die Kosten.

Die Figur wird nachfolgend mit Hilfe einer Zeichnung näher erläutert, in der unterschiedliche Ausführungsbeispiele dargestellt sind. Es zeigen:
- Fig. 1: eine erfindungsgemäße Doppelkupplung mit einer eine Reibscheibe einer Teilkupplung K2 kontaktierenden Anpressplatte, die einen Druckweitergabe-organabschnitt, nach Art eines Drucktopfes im teilweise dargestellten Längsschnitt aufweist,
- Fig. 2: ein zweites Ausführungsbeispiel einer nur im abschnittsweise Längsschnitt wiedergegebenen Mehrscheibenkupplung, wobei nur eine der Teilkupplungen dargestellt ist, und
- Fig. 3: ein weiteres Ausführungsbeispiel einer erfindungsgemäßen Kupplung, bei der ein einteiliger Drucktopf die Anpressplatte in einem Lamellenkupplungssystem ausbildet, in einer zu der Darstellung der Figur 2 vergleichbaren Weise.

Die Zeichnung ist lediglich schematischer Natur und dient nur dem Verständnis der Erfindung. Die gleichen Elemente sind mit denselben Bezugszeichen versehen. Merkmale der einzelnen Ausführungsbeispiele können auch untereinander ausgetauscht werden.

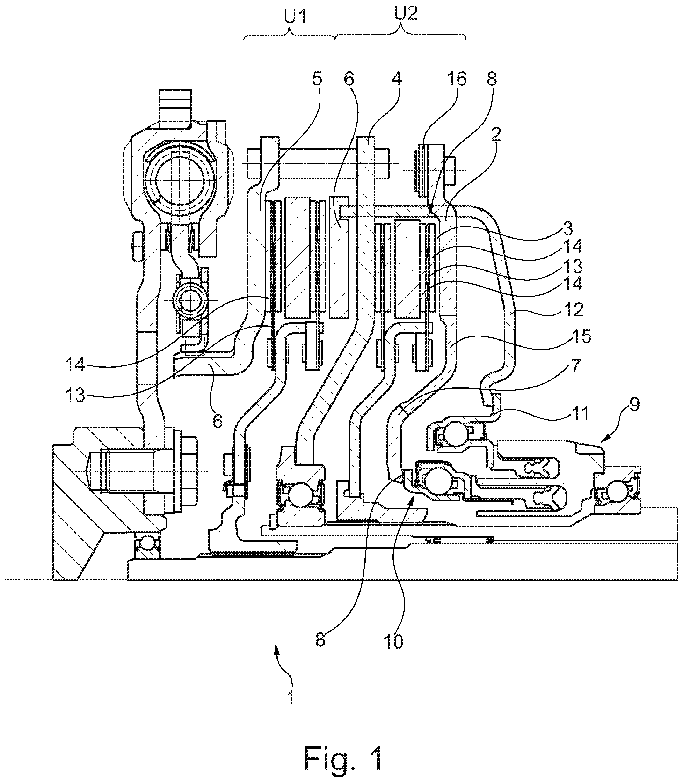

In Fig. 1 ist eine erste Ausführungsform einer erfindungsgemäßen Kupplung 1 dargestellt. Sie weist eine Anpressplatte 2 auf, die zum Einklemmen eines Drehmomentweitergabeorgans 3 zwischen ihr und einer Gegendruckplatte 4 vorbereitet ist. Die Gegendruckplatte 4 ist dabei als Zwischenplatte ausgestaltet, in Abgrenzung zu einer weiteren Gegenplatte 5, die mit einer Andrückplatte 6 zusammenarbeitet. Die Gegenplatte 5 und die Andrückplatte 6 sind Teil einer ersten Teilkupplung K1, wohingegen die Anpressplatte 2 und die Gegendruckplatte 4 Teil einer zweiten Teilkupplung K2 sind.

Ein Druckweitergabeorgan 7 ist ein integraler Bestandteil der Anpressplatte 2 und weist einen Kontaktbereich 8 auf, welcher in Anlage mit einer Betätigungseinheit 9 steht. Die Betätigungseinheit 9 ist nach Art eines konzentrischen Nehmerzylinders (CSC / Concentric Slave Cylinder) ausgebildet. Ein innerer Aktorabschnitt 10 steht im Speziellen in direkter Anlage mit dem Kontaktbereich 8. Ein äußerer Aktorabschnitt 11 kontaktiert einen Drucktopf 12 bzw. das Druckweitergabeorgan 7, welcher / welches druckweitergebend auf die Andrückplatte 6 wirkt.

Zwischen der Anpressplatte 2 und der Gegendruckplatte 4 sowie zwischen der Gegenplatte 5 und der Andrückplatte 6 ist zumindest ein als Reibscheibe 13 mit Reibbelägen 14 ausgebildetes Drehmomentweitergabeorgan 3 einklemmbar.

Die Anpressplatte 2 und das Druckweitergabeorgan 7, also der drucktopfähnlicher Abschnitt, sind zusammenhängend, insbesondere integrale Bestandteile voneinander, ergo einstückig, einmaterialig und untrennbar miteinander verbunden. Sie sind aus einem einzigen Blechmaterial gefertigt worden, das jedoch einen Verdünnungsbereich 15, also einen Bereich kleinerer Dicke aufweist. Sie sind aus einer Blechplatte durch Stanzen und/oder Tiefziehen und/oder Pressen und/oder Biegen geformt. Ein Federelement 16 steht in direkter Anlage mit der Anpressplatte 2 und ermöglicht ein aktives Lüften der Teilkupplung K2.

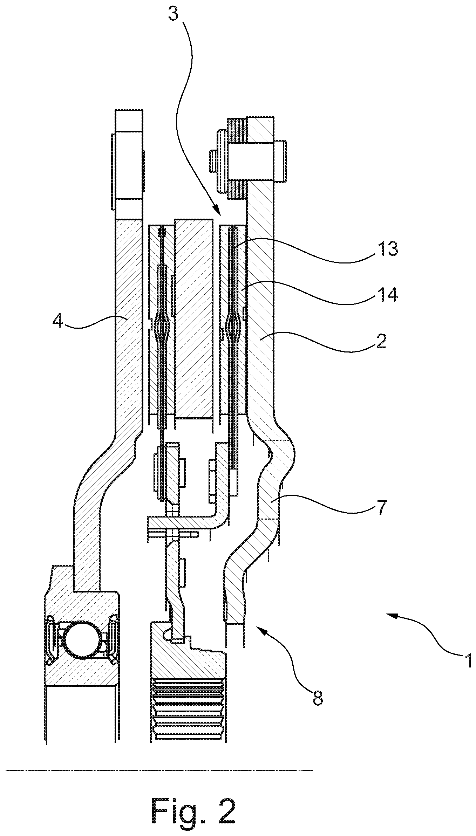

In Fig. 2 ist ein Ausschnitt eines Mehrscheibenkupplungssystems wiedergegeben. Auch hier ist die Anpressplatte 2 mit dem Druckweitergabeorgan 3 einteilig verbunden, bzw. das Druckweitergabeorgan 7 ist ein integraler Bestandteil der Anpressplatte 2 und umgedreht. Hier ist die Blechplatte, welche die Anpressplatte 2 und das Druckweitergabeorgan 7 ausbildet, zum radial inneren Rand hin dünner werdend ausgestaltet, kann aber auch eine gleichbleibende Dicke aufweisen. Ein Verdünnungsbereich 15 agiert somit als federelastischer Abschnitt.

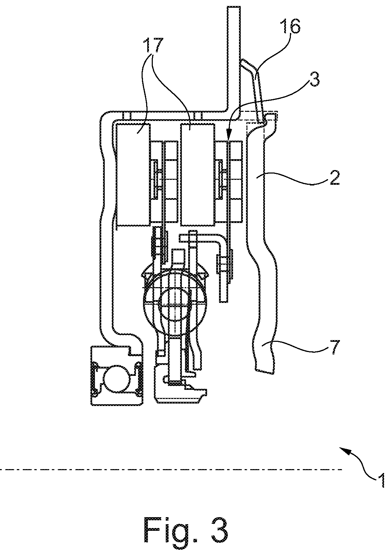

Eine ähnliche Umsetzung der erfindungsgemäßen Idee ist in der Fig. 3 zu erkennen, in der eine Lamellenkupplungslösung wiedergegeben ist. Dabei drückt die Anpressplatte 2, die wiederum einen radial nach innen abstehenden Abschnitt aufweist, nämlich das Druckweitergabeorgan 7, auf Drehmomentweitergabeorgane 3, die an Lamellen 17 grenzen. Das in dieser Lösung verwendete Federelement 16 ist als Tellerfeder ausgebildet. Es ist somit eine Trockenkupplung realisiert, die eine besondere Form einer erfindungsgemäßen Kupplung 1 ist.

### Bezugszeichenliste

- 1: Kupplung
- 2: Anpressplatte
- 3: Drehmomentweitergabeorgan
- 4: Gegendruckplatte
- 5: Gegenplatte
- 6: Andrückplatte
- 7: Druckweitergabeorgan
- 8: Kontaktbereich
- 9: Betätigungseinheit
- 10: innerer Aktorabschnitt
- 11: äußerer Aktorabschnitt
- 12: Drucktopf
- 13: Reibscheibe
- 14: Reibbelag
- 15: Verdünnungsbereich
- 16: Federelement
- 17: Lamelle

## Patentansprüche

1. Kupplung (1) für ein Kraftfahrzeug, mit einer Anpressplatte (2), die zum Einklemmen eines Drehmomentweitergabeorgans (3), wie einer Lamelle oder einer Reibscheibe (13), zusammen mit einer Gegendruckplatte (4) vorbereitet ist, wobei über ein Druckweitergabeorgan (7) ein Kraftübertragungsweg zwischen einer Betätigungseinheit (9) vorgehalten ist, wobei das Druckweitergabeorgan (7) als ein integraler Bestandteil der Anpressplatte (2) ausgebildet ist, **dadurch gekennzeichnet, dass** die Anpressplatte (2) mit einem das Druckweitergabeorgan (7) stellenden Abschnitt als Blechplatte ausgebildet ist.

2. Kupplung (1) nach Anspruch 1, **dadurch gekennzeichnet, dass** die Blechplatte spanlos in ihre Endform gebracht ist.

3. Kupplung (1) nach Anspruch 1 oder 2, **dadurch gekennzeichnet, dass** die Blechplatte eine gleichbleibende Dicke aufweist oder zum Kontaktbereich (8) des Druckweitergabeorgans (7) mit der Betätigungseinheit (9) hin eine abnehmende Dicke aufweist.

4. Kupplung (1) nach einem der Ansprüche 1 bis 3, **dadurch gekennzeichnet, dass** die Blechplatte einen federelastischen Abschnitt aufweist und/oder das Druckweitergabeorgan (7) zungenartig ausgebildet ist.

5. Kupplung (1) nach einem der Ansprüche 1 bis 4, **dadurch gekennzeichnet, dass** die Anpressplatte (2) eine zum Zusammenwirken mit dem Drehmomentweitergabeorgan (3) vorbereitete Reibfläche aufweistund/oder eine Betätigungsgruppe aufweist.

6. Kupplung (1) nach einem der Ansprüche 1 bis 5, **dadurch gekennzeichnet, dass** das Druckweitergabeorgan (7) durch Aussparungen perforiert ist, um einen Kühlfluidzugang in Richtung des Drehmomentweitergabeorgans (3) zu ermöglichen.

7. Kupplung (1) nach einem der Ansprüche 1 bis 6, **dadurch gekennzeichnet, dass** ein Federelement (16) an der Anpressplatte (2) hauptsächlich in Axialrichtung wirkend angreift.

## Claims

1. Clutch (1) for a motor vehicle, with a pressure plate (2) which is provided for clamping a torque transfer member (3), such as a lamella or a friction disc (13), together with a counterpressure plate (4), wherein a force transmission path between an actuating unit (9) is provided via a pressure transfer member (7), wherein the pressure transfer member (7) is designed as an integral part of the pressure plate (2),
**characterized in that** the pressure plate (2) with a portion providing the pressure transfer member (7) is designed as a sheet-metal plate.

2. Clutch (1) according to Claim 1, **characterized in that** the sheet-metal plate is brought into its final shape without cutting.

3. Clutch (1) according to Claim 1 or 2, **characterized in that** the sheet-metal plate has a uniform thickness or has a decreasing thickness towards the contact region (8) of the pressure transfer member (7) with the actuating unit (9).

4. Clutch (1) according to one of Claims 1 to 3, **characterized in that** the sheet-metal plate has a spring-elastic portion and/or the pressure transfer member (7) is designed in the manner of a tongue.

5. Clutch (1) according to one of Claims 1 to 4, **characterized in that** the pressure plate (2) has a friction surface provided for interaction with the torque transfer member (3) and/or has an actuating assembly.

6. Clutch (1) according to one of Claims 1 to 5, **characterized in that** the pressure transfer member (7) is perforated by recesses in order to permit access of cooling fluid in the direction of the torque transfer member (3).

7. Clutch (1) according to one of Claims 1 to 6, **characterized in that** a spring element (16) engages on the pressure place (2) in a manner primarily acting in the axial direction.

## Revendications

1. Embrayage (1) pour un véhicule automobile, comprenant une plaque de pressage (2) qui est prévue pour serrer un organe de transfert de couple (3) tel qu'une lamelle ou un disque de friction (13), conjointement avec une plaque de contre-pression (4), une voie de transfert de force entre une unité d'actionnement (9) étant maintenue par le biais d'un organe de transfert de pression (7), l'organe de transfert de pression (7) étant réalisé sous forme de composant intégral de la plaque de pressage (2), **caractérisé en ce que** la plaque de pressage (2) est réalisée en tant que plaque en tôle avec une portion fournissant l'organe de transfert de pression (7).

2. Embrayage (1) selon la revendication 1, **caractérisé en ce que** la plaque en tôle est amenée à sa forme définitive sans enlèvement de copeaux.

3. Embrayage (1) selon la revendication 1 ou 2, **caractérisé en ce que** la plaque en tôle présente une épaisseur constante ou présente, vers la région de contact (8) de l'organe de transfert de pression (7) avec l'unité d'actionnement (9), une épaisseur décroissante.

4. Embrayage (1) selon l'une quelconque des revendications 1 à 3, **caractérisé en ce que** la plaque en tôle présente une portion élastique à ressort et/ou l'organe de transfert de pression (7) est réalisé en forme de langue.

5. Embrayage (1) selon l'une quelconque des revendications 1 à 4, **caractérisé en ce que** la plaque de pressage (2) présente une surface de friction prévue pour coopérer avec l'organe de transfert de couple (3) et/ou un groupe d'actionnement.

6. Embrayage (1) selon l'une quelconque des revendications 1 à 5, **caractérisé en ce que** l'organe de transfert (7) est perforé par des évidements afin de permettre un accès à du fluide de refroidissement dans la direction de l'organe de transfert de couple (3).

7. Embrayage (1) selon l'une quelconque des revendications 1 à 6, **caractérisé en ce qu'**un élément de ressort (16) vient en prise avec la plaque de pressage (2) en agissant principalement dans la direction axiale.
